# EUROPEAN PATENT SPECIFICATION

(11) **EP 1 192 746 B1**
(45) Date of publication and mention of the grant of the patent: **03.11.2004**
(21) Application number: 00942502.6
(22) Date of filing: 10.07.2000
(51) Int. Cl.: H04J 13/00, H04L 1/00, H04B 7/26

(54) **APPARATUS AND METHOD FOR RELEASING REVERSE COMMON CHANNEL IN CDMA COMMUNICATION SYSTEM**
VERFAHREN UND VORRICHTUNG ZUR FREIGABE EINES GEMEINSAMEN RÜCKKANALS IN EINEM CDMA NACHRICHTENÜBERTRAGUNGSSYSTEM
APPAREIL ET PROCEDE DE LIBERATION D'UN CANAL COMMUN DE RETOUR DANS UN SYSTEME DE COMMUNICATION AMCR

(30) Priority: 10.07.1999 KR 9927912
(43) Date of publication of application: 03.04.2002
(73) Proprietor: Samsung Electronics Co., Ltd., Suwon City, Kyungki-do 442-370 (KR)
(72) Inventor: LEE, Hyun-Seok, Kyonggi-do 463-020 (KR); KOO, Chang-Hoi, Songnam-shi Kyonggi-do 463-020 (KR); AHN, Jae-Min, Kangnam-gu Seoul 135-239 (KR); YOON, Soon-Young, Seoul 138-160 (KR)
(74) Representative: Grünecker, Kinkeldey, Stockmair & Schwanhäusser Anwaltssozietät
(86) International application number: PCT/KR2000/000743
(87) International publication number: WO 2001/005080

(56) References cited:
- EP-A- 0 604 166
- WO-A-93/18596
- WO-A-96/18596
- WO-A-99/11012
- WO-A-99/14963
- JP-A- 4 332 230

## Description

### BACKGROUND OF THE INVENTION

### 1. Field of the Invention

The present invention relates generally to a common channel communication apparatus and method for a CDMA communication system, and in particular, to an apparatus and method for performing communication by designating a common channel.

### 2. Description of the Related Art

The existing CDMA (Code Division Multiple Access) mobile communication system primarily provides a voice service. However, in the near future, the CDMA mobile communication system will support the IMT-2000 standard that can provide a data service as well as the voice service. Specifically, the IMT-2000 standard provides high-quality voice service, moving picture service and Internet search service.

The CDMA mobile communication system performs data communication using dedicated channels and common channels. The dedicated channels and the common channels exist in both a reverse link and a forward link. The common channels are used in common by several mobile stations in communication with a base station, so that a collision may occur when several mobile stations attempt a call at the same time.

When transmitting data over the dedicated channels, the base station communicates with the mobile station through an independently assigned dedicated channel, such that there is no probability of transmission fail due to the collision between the mobile station and there is a high probability of success in transmitting a message to the base station or the mobile station. However, when transmitting the data over the common channels, the probability of transmission success is very low, so that the mobile station should repeatedly perform retransmission access in order to attempt to access the base station. The frequent retransmission operation will cause a waste of resources and an increase in interference between channels.

The present CDMA mobile communication system (particularly, the North American system) includes a reverse common control channel (R-CCCH) and a reverse enhanced access channel (R-EACH) for the common channels, while the conventional IS-95B communication system includes only a reverse access channel (R-ACH) for the reverse common channel. Therefore, when transmitting data over the R-ACH, each mobile station competes with other mobile stations in order to use the R-ACH, which may result in access fail. Therefore, there has been proposed a method for using the common channel by designating resources in order to increase transmission performance of the reverse channel. When the base station and the mobile station attempt communication through the common channel, the common channel designating method assigns (or designates) a common channel resource, with which the base station accesses the mobile station, as a dedicated or quasi-dedicated channel, so that a specific mobile station can transmit data to the base station without interference due to common channel signals generated from the other mobile stations, thereby increasing a transmission success rate.

However, in order to assign the R-CCCH and a power control channel to the mobile station, the base station needs to determine which R-CCCH is presently in use. In this regard, however, nothing has been specified in the conventional method. In this case, the base station should assign the R-CCCH based on the maximum use time of the designated channel. For example, if the maximum use time of the R-CCCH is limited to 10 seconds, reassignment of this channel is permitted 10 seconds after the channel has been used. However, since general data has a variable length, not all the messages are transmitted for the maximum use time of the R-CCCH. As a result, the base station may not reassign the R-CCCH even when it is not actually used, thereby causing a waste of the resources.

WO 99/11012 A1 discloses wireless communication systems and methods utilizing group frame acknowledgement. A first entity transmits a group of frames addressed to a second entity, concluding with a last frame which indicates an end of the group of frames.

### SUMMARY OF THE INVENTION

It is the object of the invention to provide an apparatus and method for indicating continuation/discontinuation of a common channel message being transmitted over a designated common channel in a CDMA communication system.

This object is solved by the invention as claimed in the independent claims.

Preferred embodiments are defined in the dependent claims.

It is another aspect of the present invention to provide an apparatus and method for checking a continuation indicator of a message received over a common channel, and automatically releasing the designated common channel if the received message is the last frame, in a CDMA communication system.

It is further another aspect of the present invention to provide an apparatus and method, in which a mobile station informs a base station of a use end time of a common channel, in a CDMA communication system.

It is yet another aspect of the present invention to provide an apparatus and method, in which a base station releases a designated common channel upon detecting a use end time of the common channel provided from a mobile station, in a CDMA communication system.

Accordingly a mobile station has a common channel message transmitting device which includes a message generator for generating a stream of frames each comprised of an indicator field and a data field by dividing a data stream to be transmitted, inserting an indicator indicating an end frame in the indicator field of a last one of the frames, and inserting an indicator indicating a continuous frame in each indicator field of the frames other than the last frame; and a reverse common channel transmitter for transmitting the generated message. The reverse common channel transmitter adds a CRC to the message on the common channel and the indicators are not subjected to coding.

A base station has a common channel message receiving device which includes a reverse common channel receiver for receiving the reverse common channel message transmitted from the mobile station; and a message processor for examining the indicator field inserted in the received reverse common channel frame, and releasing the reverse common channel when the indicator field indicates an end frame of the reverse common channel. The message processor examines a CRC added to the reverse common channel message, and releases the reverse common channel when CRC errors detected exceed a predetermined value.

### BRIEF DESCRIPTION OF THE DRAWINGS

The above and other objects, features and advantages of the present invention will become more apparent from the following detailed description when taken in conjunction with the accompanying drawings in which:
FIG. 1A is a diagram for explaining a reservation mode operation of a common channel in a CDMA communication system;
FIG. 1B is a diagram for explaining a designated mode operation of a common channel in a CDMA communication system;
FIG. 2 is a diagram illustrating a message format of a common channel according to an embodiment of the present invention;
FIG. 3 is a flow chart illustrating a procedure for generating a reverse common channel message and transmitting the generated reverse common channel message in a mobile station for a CDMA communication system according to an embodiment of the present invention;
FIG. 4 is a flow chart illustrating a procedure for receiving a reverse common channel message and controlling the received reverse common channel message in a base station for a CDMA communication system according to an embodiment of the present invention;
FIG. 5 is a flow chart illustrating a procedure for generating a forward common channel message and transmitting the generated forward common channel message in a base station for a CDMA communication system according to an embodiment of the present invention; and
FIG. 6 is a flow chart illustrating a procedure for receiving a forward common channel message and controlling the received forward common channel in a mobile station for a CDMA communication system according to an embodiment of the present invention.

### DETAILED DESCRIPTION OF THE PREFERRED EMBODIMENT

A preferred embodiment of the present invention will be described herein below with reference to the accompanying drawings. In the following description, well-known functions or constructions are not described in detail since they would obscure the invention in unnecessary detail.

In a CDMA communication system which designates a common channel according to an embodiment of the present invention, a mobile station provides a base station with a use end time of a designated common channel, and the base station then releases the designated common channel according to the use end time information provided from the mobile station. To this end, in the embodiment of the present invention, the mobile station indicates continuation/discontinuation of the next frame on the present frame being transmitted over the reverse common channel, and the base station determines whether to release the reverse common channel by examining continuation/discontinuation of the message frame being received over the reverse common channel. In this manner, the base station can assign the common channel to other mobile stations, thus increasing utilization efficiency of the common channel.

In an embodiment of the present invention, it is assumed that the mobile station sets a continuation indicator (CI) field, which indicates continuation/discontinuation of the next frame, at the head of a message frame for the reverse common channel. However, the same results can be obtained even though the CI field is inserted in the message frame at a specific position previously appointed between the base station and the mobile station. Further, although the CI field is comprised of one bit in an embodiment of the present invention, the length of the CI field may vary, when necessary. In addition, although the invention will be described with reference to an example wherein the common channel releasing method according to the present invention is applied to the reverse common channel, the invention can be applied to the forward common channel as well as the reverse common channel.

Prior to describing the common channel message releasing method according to an embodiment of the present invention, reference will be made to the types and structure of the common channels for the CDMA communication system, and reference will also be made to a reservation mode operation and a designated mode operation of the common channel.

Now, reference will be made to the structure of the common channels for the CDMA communication system. Hereinafter, the common channels represented by 'R' indicate the common channels for the reverse link, for which the mobile station includes a transmitter and the base station includes a receiver. Further, the common channels represented by 'F' indicate the common channels for the forward link, for which the base station includes a transmitter and the mobile station includes a receiver.

First, a forward common control channel (F-CCCH) is used for transmitting data from the base station to the mobile station and is simultaneously received by several mobile stations. A message being transmitted over the F-CCCH includes a mobile station identifier in order to identify a target mobile station. The F-CCCH is used to transmit user data and a layer-3 signal. If it is desired to receive a response to the layer-3 signal over the R-CCCH in a designated mode from the mobile station, the F-CCCH transmits the layer-3 signal together with channel identifiers of a common power control channel (CPCCH) and a common power control subchannel (CPC-SCH), which are used for power control of the R-CCCH.

Second, the R-CCCH is used for transmitting data from the mobile station to the base station and is shared by several mobile stations. The R-CCCH includes a reservation mode and a designated mode. The reservation mode is used to prevent a collision which may occur when several mobile stations simultaneously attempt to use this channel, and is performed using the R-EACH and the F-CACH (Forward-Common Assignment Channel). In the designated mode of operation, to prevent the collision, the layer-3 message being transmitted over the F-CCCH provides the mobile station with channel number for the R-CCCH over which a response to the layer-3 message is to be transmitted, and channel numbers of the CPCCH and the CPC-SCH. In order to determine whether a specific mobile station has transmitted data in the reservation mode, each message transmitted includes a mobile station identifier. The R-CCCH is used to transmit a layer-3 control signal for the user data. When the mobile station transmits a message using the R-CCCH, strength of its output is controlled according to a power control signal transmitted from the base station.

Third, the R-EACH is used to inform the base station that the mobile station will attempt to use the R-CCCH in the reservation mode. The mobile station transmits its Hash ID to the base station in order to inform the base station as to which mobile station will attempt to use the R-EACH. The identifier is so short in length that the mobile stations may not each have unique values. However, there is a very low probability that several mobile stations will simultaneously transmit messages for requesting the use of the R-CCCH through the R-EACH using the same identifier. A response to the request for the R-CCCH, transmitted from the mobile station over the R-EACH, is transmitted over the F-CACH.

Fourth, the F-CACH is used to transmit a response to the request for the R-CCCH, received by the base station over the R-EACH in the reservation mode. Since the base station can simultaneously receive the requests for the R-CCCH from several mobile stations, the response messages include the identifiers transmitted from the mobile stations, indicating from which mobile station the response has been received. Further, the messages transmit the channel numbers of the R-CCCH, CPCCH and CPC-SCH to the mobile station.

Fifth, the CPCCH is used when the base station transmits a power control signal for the R-CCCH.

Sixth, the CPC-SCH is created by dividing one CPCCH in a given time unit. The CPCCH is assigned to each base station in a CPC-SCH unit.

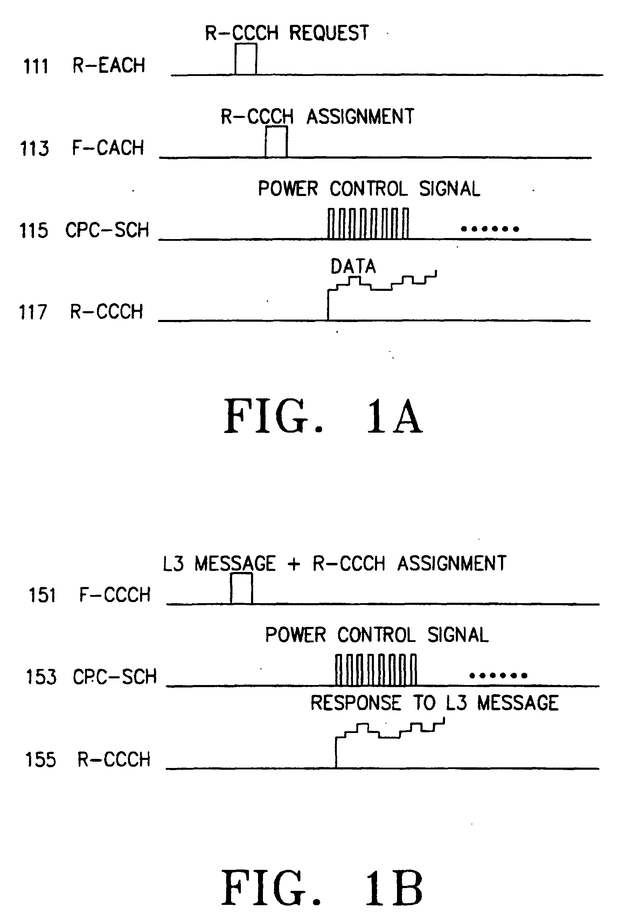

A detailed description will be made of operation modes of the above common channels with reference to FIGS. 1A and 1B. Specifically, FIG. 1A shows operation of the common channels performed in the reservation mode, and FIG. 1B shows operation of the common channels performed in the designated mode.

Referring to FIG. 1A, a detailed description will be made of operation of the common channels performed in the reservation mode. If the mobile station sends a request for using an R-CCCH to the base station over the R-EACH as shown by 111, the base station assigns the R-CCCH through the F-CACH as shown by 113. Thereafter, the base station transmits a transmission power control signal for the R-CCCH to the mobile station over the CPC-SCH as shown by 115, and the mobile station then transmits a message to the base station over the R-CCCH as shown by 117, while controlling transmission power of the R-CCCH message according to the power control signal transmitted from the base station.

Referring to FIG. 1B, a detailed description will be made of operation of the common channels performed in the designated mode. The base station transmits an L3 (layer-3) message and R-CCCH assignment information to the mobile station over the F-CCCH as shown by 151, and transmits a power control signal over the CPC-SCH as shown by 153 in order to control transmission power of the designated R-CCCH. The mobile station then sets the R-CCCH to a designated common channel according to the R-CCCH assignment information, and then transmits a response message for the L3 message over the R-CCCH as shown by 155, while controlling transmission power of the R-CCCH according to the power control signal received over the CPC-SCH. Although FIG. 1B shows an example in which the R-CCCH is designated under the control of the base station, the R-CCCH may also be designated at the request of the mobile station.

In an embodiment of the present invention in which a message is communicated by designating the common channel in the above-stated method, a transmission side indicates whether communication of the message on the designated common channel is ended or not, and transmits the indication information. In the description below, it will be assuming that the designated common channel is R-CCCH, the mobile station indicates whether the use of the R-CCCH is ended or not using the message frame, and the base station determines whether use of the designated R-CCCH is ended by analyzing the received R-CCCH message frame.

In the CDMA communication system according to an embodiment of the present invention, the base station and the mobile station include a known device for transmitting a message frame of the common channel and a known device for processing a message frame received over the common channel. However, in the present invention the common channel message generating device includes a message generator for generating a frame in which an indicator for indicating continuation of the next frame is inserted, and the common channel message receiving device analyzes the indicator included in the received message frame, to automatically release the common channel if the received frame is the last frame. Therefore, for simplicity, the detailed description of the devices for transmitting and receiving the common channel will be avoided.

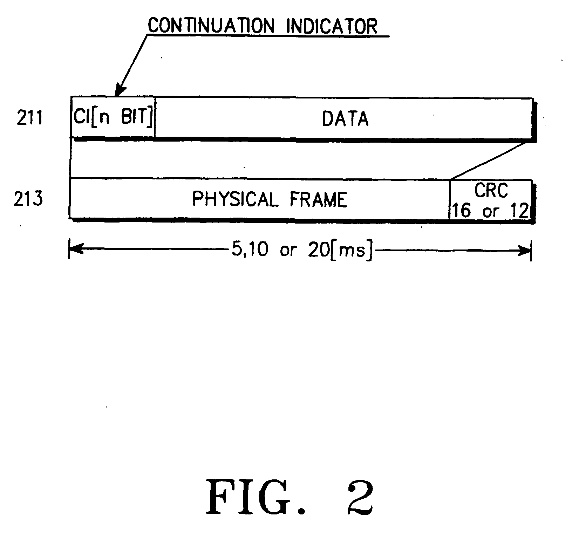

FIG. 2 shows a frame format of an R-CCCH message according to an embodiment of the present invention. Reference numeral 211 indicates an R-CCCH message to which a CI (Continuation Indicator) for indicating continuation/discontinuation of the next message is added. Reference numeral 213 indicates a message frame transmitted over the R-CCCH, and a CRC (Cyclic Redundancy Code) is added to the message frame. The R-CCCH frame having the format shown by 213 may have a size (or length) of 5ms, 10ms or 20ms. Therefore, the mobile station adds the CI indicator to the message frame before transmitting the message frame over the R-CCCH. When there is an R-CCCH frame to transmit next, the mobile station sets the CI indicator to indicate continuous use of the R-CCCH. Otherwise, when there is no R-CCCH frame to transmit next, the mobile station resets the CI indicator to indicate use end of the R-CCCH.

Therefore, with regard to the device for transmitting the reverse common channel message included in the mobile station, an upper layer message generator examines the size of a message to be transmitted over the reverse common channel, and adds thereto the CI indicator, shown by 211 of FIG. 2, for indicting existence/non-existence of the next frame, thereby to generate the common channel message. Further, the reverse common channel transmitter of the physical layer adds a CRC to the message generated by the message generator before transmission. Here, the reverse common channel transmitter may be assigned to a reverse common channel that is designated according to the designation information from the base station.

Next, with regard to the base station device for receiving the reverse common channel message transmitted from the mobile station, a reverse common channel receiver receives the reverse common channel message transmitted from the mobile station. A message processor examines the CI indicator added to the received reverse common channel message, and releases assignment of the reverse common channel when use of the reverse common channel is ended. At this point, the reverse common channel receiver may assign the designated reverse common channel in order to exclusively communicate a common channel message with a specific mobile station.

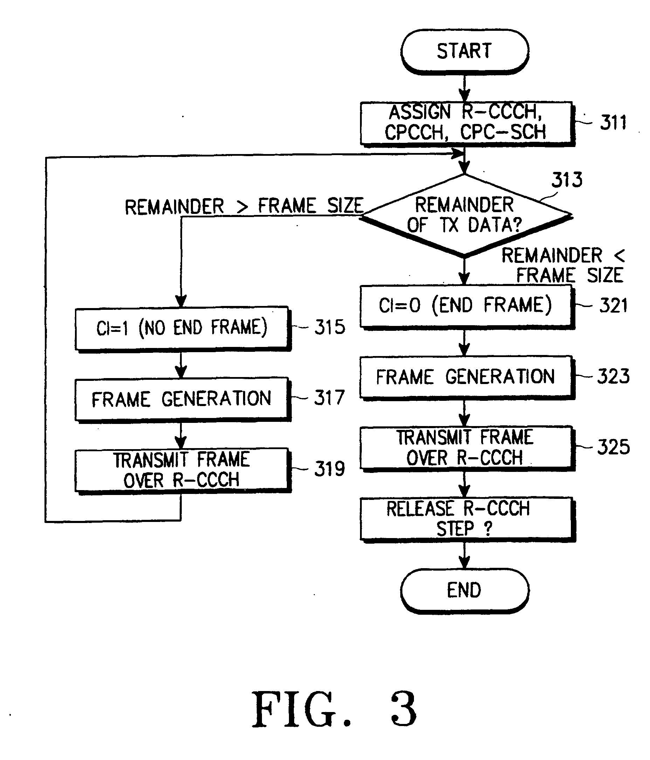

FIG. 3 shows a procedure for transmitting a message over the R-CCCH in the mobile station according to an embodiment of the present invention. Although the mobile station can transmit the message over the R-CCCH after adding the CI indicator to the message frame both in the reservation mode and the designated mode, the present invention will be described with reference to an embodiment wherein the mobile station transmits the R-CCCH message in the designated mode.

Referring to FIG. 3, a description will be made regarding how the mobile station informs the base station that use of the R-CCCH is ended, according to an embodiment of the present invention. Upon receipt of an R-CCCH assignment message from the base station, the mobile station sets the R-CCCH to a designated channel according to the assignment message in step 311. The R-CCCH can be set to the designated channel using a designated long code. For the long code, there can be used (1) a long code mask using a unique electronic serial number (ESN) of the mobile station, (2) a public long code mask, or (3) a separately designated long code to be exclusively used between the base station and the mobile station. Therefore, by setting the designated long code to a spreading code for the R-CCCH, the mobile station sets the R-CCCH to the designated channel. At this point, the long code should be able to be shared by the base station and the mobile station.

After setting the R-CCCH to the designated channel, the mobile station examines an amount of the data to be transmitted over the R-CCCH in step 313. If the remaining amount of the data to be transmitted over the R-CCCH exceeds the size of the frame being presently transmitted in step 313, i.e., if there is an R-CCCH message frame to be transmitted next, the mobile station sets the CI indictor in step 315, to indicate that there is a frame to be transmitted next. Subsequently, the mobile station generates a CRC and adds the CRC to the generated message frame in step 317. Thereafter, the mobile station transmits the generated message frame over the R-CCCH in step 319, and returns to step 313 to transmit the next frame.

Here, the message frame being transmitted over the R-CCCH is spread with the designated long code before transmission, and the transmission power of the signal transmitted over the R-CCCH is controlled according to a power control signal received from the base station over the CPC-SCH.

By repeating the above process, the mobile station examines the remaining amount of the data being transmitted over the R-CCCH. If it is examined in step 313 that the remaining amount of the data to be transmitted over the R-CCCH does not exceed the size of the frame being presently transmitted, i.e., if there is no R-CCCH message frame to be transmitted next, the mobile station resets the CI indicator in step 321, to indicate that there is no frame to be transmitted next. The mobile station generates a CRC and adds the CRC to the generated message frame in step 323. Thereafter, in step 325, the mobile station transmits the generated message frame over the R-CCCH and then releases the R-CCCH.

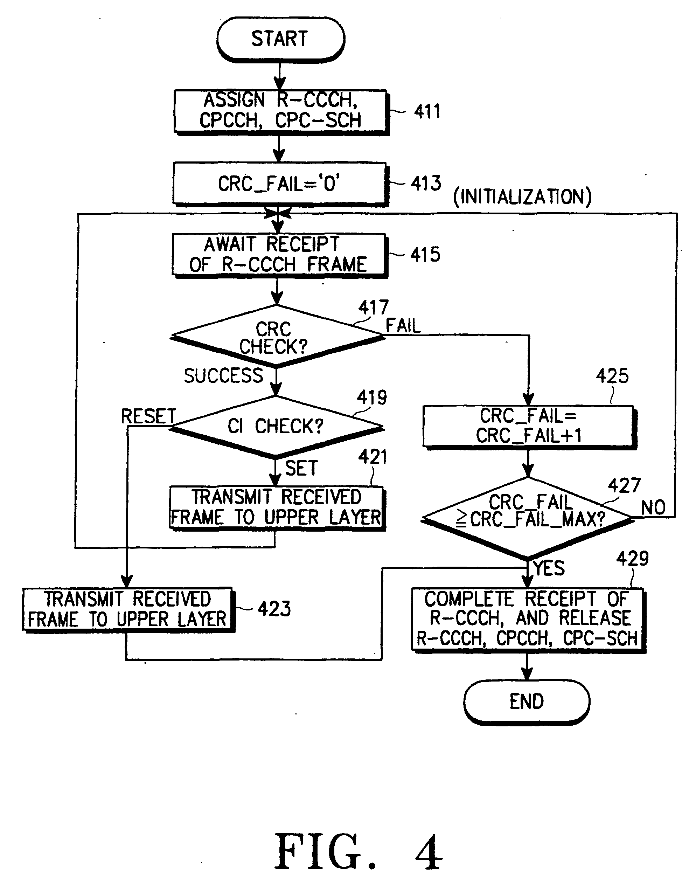

If the mobile station transmits the message frame after adding the CI indicator thereto, the base station will process the message being received over the R-CCCH in accordance with the procedure shown in FIG. 4.

Referring to FIG. 4, when the R-CCCH is designated to a specific mobile station, the base station transmits an R-CCCH assignment command to the corresponding mobile station and, at the same time, assigns the R-CCCH, CPCCH and CPC-SCH, in step 411. After assigning these channels, the base station initializes CRC_FAIL to '0' in step 413. Thereafter, the base station awaits a message to be received over the designated R-CCCH in step 415.

Upon receipt of the message, the base station examines CRC of the received R-CCCH message frame in step 417. If the CRC check is successful in step 417, the base station examines the CI indicator added to the R-CCCH message frame in step 419. Here, the CI indicator is an indicator transmitted from the mobile station for indicating existence/non-existence of the next R-CCCH frame. Therefore, when the CI indicator is set to a specific value (e.g., '1'), i.e., when there is an R-CCCH frame to be subsequently transmitted, the base station transmits the CRC-checked message frame to the upper layer in step 421, and returns to step 415 to prepare for the next state.

However, if the CI indicator is reset in step 419, i.e., if there is no R-CCCH frame to be transmitted next, the base station transmits the CRC-checked message frame to the upper layer in step 423. Thereafter, the base station proceeds to step 429 where the base station performs the operation of releasing the designated R-CCCH. That is, upon detecting complete receipt of the R-CCCH message, the base station releases the R-CCCH, CPCCH and CPC-SCH, in step 429.

As described above, since the CI field transmitted from the mobile station, for indicating whether the next message frame continues or not, is checked at the receiver of the base station after CRC check for the frame, the CI indicator has a very high reliability. Therefore, additional coding is not necessary for the CI field.

If the CRC check fails in step 417, examining of the received R-CCCH message frame, the base station proceeds to step 425 to increase the CRC_FAIL value by one, and then examines the CRC_FAIL value in step 427. If CRC_FAIL < CRC_FAIL_MAX in step 427, the base station returns to step 415 to prepare for the next state. However, if CRC_FAIL ≥ CRC_FAIL_MAX in step 427, the base station proceeds to step 429 where the base station ends receipt of the R-CCCH and releases the R-CCCH, CPCCH and CPC-SCH.

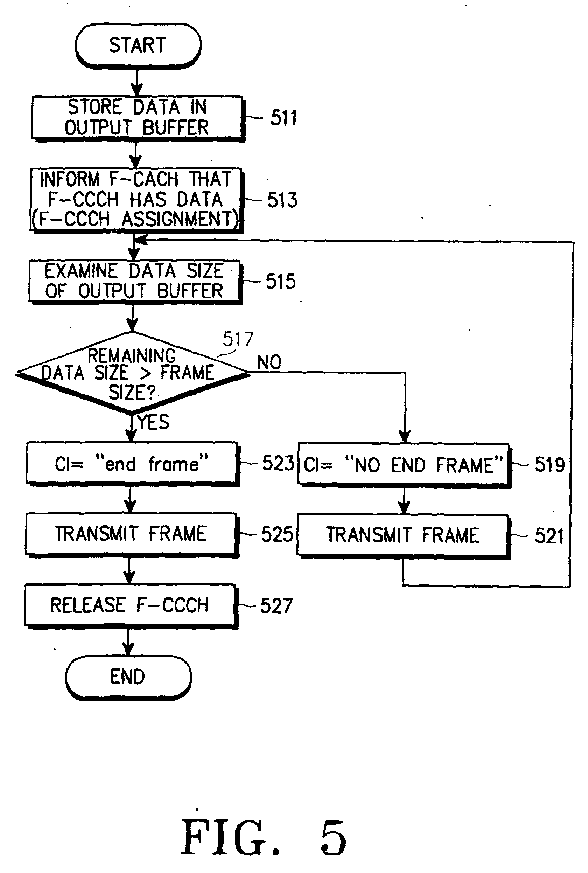

FIG. 5 shows a procedure for transmitting a forward common channel message in the base station according to an embodiment of the present invention.

Referring to FIG. 5, a description will be made regarding how the base station informs the mobile station that use of the F-CCCH is ended, according to an embodiment of the present invention. When a message to be transmitted over the F-CCCH arrives at an output buffer, the base station detects the message in step 511, and informs, in step 513, the F-CACH that the F-CCCH has data to transmit. Then, the base station assigns the F-CCCH using the designated channel or the normal common channel.

Thereafter, the base station analyzes the size of the data to be transmitted over the F-CCCH in step 515, and examines the data remaining after transmission of the present frame in step 517. That is, the base station examines in step 517 whether the size of the data in the output buffer is smaller than the frame size. If the remaining amount of the data to be transmitted over the F-CCCH exceeds the size of the frame being presently transmitted in step 517, i.e., if there is an F-CCCH message frame to be transmitted next, the base station sets the CI indicator to '1' (CI=1, indicating "no end frame") in step 519 to indicate that there is a frame to be transmitted next. Thereafter, the base station transmits the generated message frame over the F-CCCH in step 521, and returns to step 515 to prepare for transmitting the next message frame.

By repeating the above process, the base station examines the remaining amount of the data being transmitted over the F-CCCH. If the remaining amount of the data to be transmitted over the F-CCCH does not exceed the size of the frame being presently transmitted in step 517, i.e., if there is no F-CCCH message frame to be transmitted next, the base station resets the CI indicator to '0' (CI=0, indicating "end frame") in step 523 to indicate that there is no frame to be transmitted next. Thereafter, the base station transmits the generated message frame over the F-CCCH in step 525, and releases the F-CCCH in step 527.

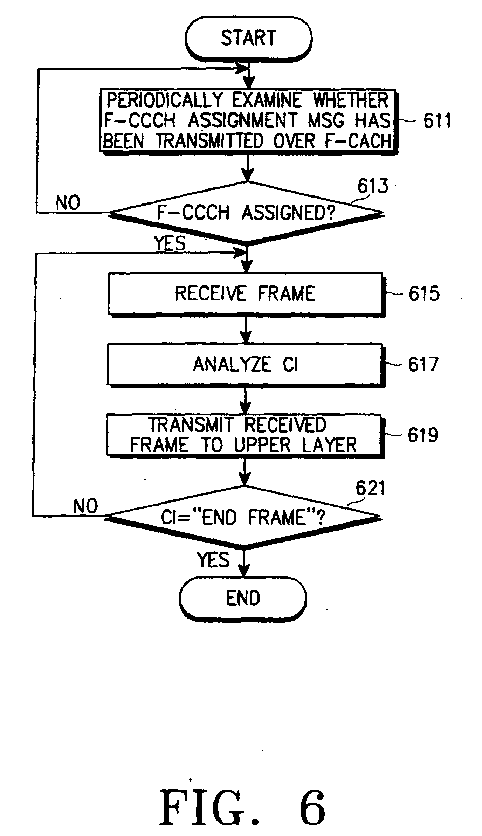

If the base station transmits the CI-added message frame, the mobile station will process the message received over the F-CCCH in accordance with the procedure of FIG. 6.

Referring to FIG. 6, the mobile station periodically examines in step 611 whether the F-CCCH assignment message has been received over the F-CACH. Upon receipt of the data transmitted from the base station through the F-CCCH, the mobile station detects the data in step 613, and receives an F-CCCH message transmitted from the base station in step 615. Thereafter, the mobile station analyzes the CI indicator added to the F-CCCH message frame in step 617. Here, the CI indictor is an indicator transmitted from the base station, for indicating whether there exists the next F-CCCH frame. After analyzing the CI indicator, the mobile station transmits the message frame to the upper layer in step 619. Thereafter, the mobile station determines in step 621 whether the CI indicator indicates "end frame". If the CI indicator indicates "no end frame" (CI=1), the mobile station returns to step 615 to prepare for the next state. Otherwise, if the CI indicator is reset to indicate "end frame" (CI=0) in step 621, i.e., if there is no F-CCCH frame to be transmitted next, the mobile station ends receipt of the F-CCCH message.

To sum up, when transmitting a message over the F-CCCH, the base station examines the size of the data to be transmitted over the F-CCCH to indicate existence/non-existence of data to be transmitted next. The mobile station then periodically examines existence/non-existence of a message received over the F-CCCH, and analyzes the CI-added message while receiving data over the F-CCCH, to determine whether there is a succeeding frame. If there is no more frame to receive, the mobile station releases the F-CCCH.

As described above, in the CDMA communication system, during reverse common channel communication, the mobile station can inform the base station of an accurate, reliable use end time of the R-CCCH, so that the base station can assign the R-CCCH to the increased number of mobile stations, thus increasing utilization efficiency of the R-CCCH.

While the invention has been shown and described with reference to a certain preferred embodiment thereof, it will be understood by those skilled in the art that various changes in form and details may be made therein without departing from the scope of the invention as defined by the appended claims.

## Claims

1. A device for transmitting a common channel message (211) in a CDMA communication system, comprising:
a message generator for generating a stream of frames (213) each comprised of an indicator field and a data field by dividing a data stream to be transmitted, inserting an indicator indicating whether each of said frames is a last frame to be transmitted or not in each indicator field of said frames; and
a common channel transmitter for transmitting the generated message.

2. The device as claimed in claim 1, wherein the common channel transmitter adds a CRC to the message on the common channel such that the indicators are not subjected to coding.

3. The device as claimed in claim 1 or 2, wherein said indicator indicates a continuous frame if inserted in the indicator field of a frame other than a last frame, and an end frame if inserted in the indicator field of the last one of the frames.

4. The device as claimed in one of claims 1 to 3, wherein the common channel is a common control channel.

5. The device as claimed in one of claims 1 to 4, adapted to the use of a reverse common channel.

6. The device as claimed in one of claims 1 to 4, adapted to the use of a forward common channel.

7. A device for receiving a common channel message (211) in a CDMA communication system including a generator which generates a stream of frames (213) each comprised of an indicator field and a data field by dividing a data stream to be transmitted, inserts an indicator indicating whether each of said frames is a last frame to be transmitted or not in each indicator field of said frames, and transmits a common channel message, the device comprising:
a common channel receiver for receiving the common channel message; and
a message processor for examining the indicator field in the received common channel frame, and releasing the common channel when the indicator field indicates an end frame of the common channel.

8. The device as claimed in claim 7, wherein the message processor examines a CRC added to the common channel message, and releases the common channel when CRC errors detected exceed a predetermined value.

9. The device as claimed in claim 7 or 8, adapted to the use of a reverse common channel.

10. The device as claimed in claim 7 or 8, adapted to the use of a forward common channel.

11. A method for transmitting a common channel message (211) in a CDMA communication system, comprising the steps of:
generating (317, 323) a stream of frames (213) each comprised of an indicator field and a data field by dividing a data stream to be transmitted;
inserting (315, 317; 519, 521) an indicator indicating a continuous frame in each indicator field of the frames other than a last frame;
inserting (321, 323; 523, 525) an indicator indicating an end frame in the indicator field of the last one of said frames; and
transmitting (319, 325; 521, 525) the generated message over a common channel.

12. The method as claimed in claim 11, adapted to operate the device of one of claims 1 to 6.

13. A method for receiving a common channel message (211) in a CDMA communication system including a generator which generates a stream of frames (213) each comprised of an indicator field and a data field by dividing a data stream to be transmitted, inserts an indicator indicating whether each of said frames is a last frame to be transmitted or not in each indicator field of said frames, and transmits a common channel message, the method comprising the steps of:
receiving (415, 615) the common channel message; and
examining (419, 617, 621) the indicator field in the received common channel frame, and releasing (429) the common channel when the indicator field indicates an end frame of the common channel.

14. The method as claimed in claim 13, adapted to operate the device of one of claims 7 to 10.

## Patentansprüche

1. Vorrichtung zur Übertragung einer Gleichkanal-Nachricht-(211) in einem CDMA-Kommunikationssystem, die umfasst:
einen Nachrichtengenerator zum Erzeugen eines Stromes von Rahmen (213), jeweils bestehend aus einem Anzeigefeld und einem Datenfeld, durch Teilen eines zu übertragenden Datenstromes, wobei in ein jedes Anzeigefeld der Rahmen eine Anzeige eingefügt wird, die angibt, ob es sich bei einem jeden Rahmen um einen letzten zu übertragenden Rahmen handelt oder nicht; und
einen Gleichkanalsender zum Übertragen der erzeugten Nachricht.

2. Vorrichtung nach Anspruch 1, wobei der Gleichkanalsender einen zyklischen Redundanz-Prüfblock (CRC) zu der Nachricht an dem Gleichkanal hinzufügt, so dass die Anzeigen nicht kodiert werden.

3. Vorrichtung nach Ansprüchen 1 oder 2, wobei die Anzeige einen durchgehenden Rahmen anzeigt, wenn sie in das Anzeigefeld eines Rahmens mit Ausnahme eines letzten Rahmens eingefügt wird, und wobei sie einen End-Rahmen anzeigt, wenn sie in das Anzeigefeld des letzten Rahmens eingefügt wird.

4. Vorrichtung nach Ansprüchen 1 bis 3, wobei der Gleichkanal ein gemeinsamer Steuerkanal ist.

5. Vorrichtung nach Ansprüchen 1 bis 4, angepasst an die Nutzung eines gemeinsamen Rückkanals.

6. Vorrichtung nach Ansprüchen 1 bis 4, angepasst an die Nutzung eines gemeinsamen Vorwärtskanals.

7. Vorrichtung zum Empfangen einer Gleichkanal-Nachricht (211) in einem CDMA-Kommunikationssystem mit einem Generator, der einen Strom von Rahmen (213) erzeugt, die jeweils aus einem Anzeigefeld und aus einem Datenfeld bestehen, durch Teilen eines zu übertragenden Datenstromes, wobei der Generator weiterhin eine Anzeige in ein jedes Anzeigefeld der Rahmen einfügt, die anzeigt, ob ein jeweiliger Rahmen ein letzter zu übertragender Rahmen ist oder nicht, und eine Gleichkanal-Nachricht überträgt, wobei die Vorrichtung umfasst:
einen Gleichkanal-Empfänger zum Empfangen der Gleichkanal-Nachricht; und
einen Nachrichtenprozessor zum Überprüfen des Anzeigefeldes in dem empfangenen Gleichkanal-Rahmen und zur Freigabe des Gleichkanals, wenn das Anzeigefeld einen End-Rahmen des Gleichkanals anzeigt.

8. Vorrichtung nach Anspruch 7, wobei der Nachrichtenprozessor einen zu der Gleichkanal-Nachricht hinzugefügten zyklischen Redundanz-Prüfblock (CRC) überprüft und den Gleichkanal freigibt, wenn erkannte CRC-Fehler einen vorbestimmten Wert überschreiten.

9. Vorrichtung nach Ansprüchen 7 bzw. 8, angepasst an die Nutzung eines gemeinsamen Rückkanals.

10. Vorrichtung nach Ansprüchen 7 bzw. 8, angepasst an die Nutzung eines gemeinsamen Vorwärtskanals.

11. Verfahren zur Übertragung einer Gleichkanal-Nachricht (211) in einem CDMA-Kommunikationssystem, das die Schritte umfasst:
Erzeugen (317, 323) eines Stromes von Rahmen (213), jeweils bestehend aus einem Anzeigefeld und einem Datenfeld, durch Teilen eines zu übertragenden Datenstromes;
Einfügen (315, 317; 519, 521) einer Anzeige, die einen durchgehenden Rahmen anzeigt, in jedes Anzeigefeld der Rahmen mit Ausnahme eines letzten Rahmens;
Einfügen (321, 323; 523, 525) einer Anzeige, die einen End-Rahmen anzeigt, in das Anzeigefeld des letzten der Rahmen; und
Übertragen (319, 325; 521, 525) der erzeugten Nachricht über einen Gleichkanal.

12. Verfahren nach Anspruch 11, angepasst an den Betrieb der Vorrichtung eines der Ansprüche 1 bis 6.

13. Verfahren zum Empfangen einer Gleichkanal-Nachricht (211) in einem CDMA-Kommunikationssystem mit einem Generator, der einen Strom von Rahmen (213) erzeugt, die jeweils aus einem Anzeigefeld und einem Datenfeld bestehen, durch Teilen eines zu übertragenden Datenstromes; der weiterhin eine Anzeige in ein jedes Anzeigefeld der Rahmen einfügt, die anzeigt, ob ein jeder Rahmen ein letzter zu übertragender Rahmen ist oder nicht; und der eine Gleichkanal-Nachricht überträgt, wobei das Verfahren die Schritte umfasst:
Empfangen (415, 615) der Gleichkanal-Nachricht; und
Überprüfen (419, 617, 621) des Anzeigefeldes in dem empfangenen Gleichkanal-Rahmen und Freigeben (429) des Gleichkanals, wenn das Anzeigefeld einen End-Rahmen des Gleichkanals anzeigt.

14. Verfahren nach Anspruch 13, angepasst an den Betrieb der Vorrichtung aus einem der Ansprüche 7 bis 10.

## Revendications

1. Dispositif pour émettre un message de canal commun (211) dans un système de communication CDMA (accès multiple par répartition en code), comprenant :
un générateur de message pour produire un flot de trames (213), chacune étant composée d'un champ d'indicateur et d'un champ de données en divisant un flot de données à émettre, en insérant un indicateur indiquant si chacune desdites trames est une dernière trame à émettre ou non dans chaque champ d'indicateur desdites trames ; et
un émetteur de canal commun pour émettre le message produit.

2. Dispositif selon la revendication 1, dans lequel l'émetteur de canal commun ajoute un CRC (champ de contrôle de redondance cyclique) au message sur le canal commun de sorte que les indicateurs ne sont pas soumis à un codage.

3. Dispositif selon la revendication 1 ou 2, dans lequel ledit indicateur indique une trame continue s'il est inséré dans le champ d'indicateur d'une trame autre qu'une dernière trame, et une trame de fin s'il est inséré dans le champ d'indicateur de la dernière des trames.

4. Dispositif selon l'une des revendications 1 à 3, dans lequel le canal commun est un canal de commande commun.

5. Dispositif selon l'une des revendications 1 à 4, conçu pour l'utilisation d'un canal commun inverse.

6. Dispositif selon l'une des revendications 1 à 4, conçu pour l'utilisation d'un canal commun direct.

7. Dispositif pour recevoir un message de canal commun (211) dans un système de communication CDMA comprenant un générateur qui produit un flot de trames (213), chacune étant composée d'un champ d'indicateur et d'un champ de données en divisant un flot de données à émettre, insère un indicateur indiquant si chacune desdites trames est ou non une dernière trame à émettre dans chaque champ d'indicateur desdites trames, et émet un message de canal commun, le dispositif comprenant :
un récepteur de canal commun pour recevoir le message de canal commun ; et
un processeur de message pour examiner le champ d'indicateur dans la trame de canal commun reçue, et pour libérer le canal commun quand le champ d'indicateur indique une trame de fin du canal commun.

8. Dispositif selon la revendication 7, dans lequel le processeur de message examine un CRC ajouté au message de canal commun, et libère le canal commun quand des erreurs de CRC détectées dépassent une valeur prédéterminée.

9. Dispositif selon la revendication 7 ou 8, conçu pour l'utilisation d'un canal commun inverse.

10. Dispositif selon la revendication 7 ou 8, conçu pour l'utilisation d'un canal commun direct.

11. Procédé pour émettre un message de canal commun (211) dans un système de communication CDMA, comprenant les étapes consistant à :
produire (317, 323) un flot de trames (213), chacune étant composée d'un champ d'indicateur et d'un champ de données en divisant un flot de données à émettre ;
insérer (315, 317 ; 519, 521) un indicateur indiquant une trame continue dans chaque champ d'indicateur des trames autres qu'une dernière trame ;
insérer (321, 323 ; 523, 525) un indicateur indiquant une trame de fin dans le champ d'indicateur de la dernière desdites trames ; et
émettre (319, 325 ; 521, 525) le message produit sur un canal commun.

12. Procédé selon la revendication 11, conçu pour mettre en oeuvre le dispositif selon l'une des revendications 1 à 6.

13. Procédé pour recevoir un message de canal commun (211) dans un système de communication CDMA comprenant un générateur qui produit un flot de trames (213), chacune étant composée d'un champ d'indicateur et d'un champ de données en divisant un flot de données à émettre, insère un indicateur indiquant si chacune desdites trames est une dernière trame à émettre ou non dans chaque champ d'indicateur desdites trames, et émet un message de canal commun, le procédé comprenant les étapes consistant à :
recevoir (415, 615) le message de canal commun ; et
examiner (419, 617, 621) le champ d'indicateur dans la trame de canal commun reçue, et libérer (429) le canal commun quand le champ d'indicateur indique une trame de fin du canal commun.

14. Procédé selon la revendication 13, conçu pour mettre en oeuvre le dispositif selon l'une des revendications 7 à 10.
